# EUROPÄISCHE PATENTSCHRIFT

(11) **EP 3 150 442 B1**
(45) Veröffentlichungstag und Bekanntmachung des Hinweises auf die Patenterteilung: **14.03.2018**
(21) Anmeldenummer: 16191721.6
(22) Anmeldetag: 30.09.2016
(51) Int. Cl.: B60R 13/02, B60R 13/04

(54) **ZIERTEIL FÜR EIN FAHRZEUG**
DECORATIVE TRIM FOR A VEHICLE
PIÈCE DÉCORATIVE DE VÉHICULE

(30) Priorität: 02.10.2015 DE 102015219128
(43) Veröffentlichungstag der Anmeldung: 05.04.2017
(73) Patentinhaber: Wiegand GmbH, 99994 Schlotheim (DE)
(72) Erfinder: TOTTLEBEN, Wolfgang, 99974 Mühlhausen (DE); WACK, Thomas, 99713 Ebeleben (DE)
(74) Vertreter: Finger, Catrin

(56) Entgegenhaltungen:
- EP-A1- 2 684 744
- DE-A1- 10 239 579
- DE-A1-102012 110 153
- DE-A1-102015 101 012
- DE-U1-202010 005 688

## Beschreibung

Die Erfindung betrifft ein Zierteil für ein Fahrzeug, mit einer Trägerschicht und einer Deckschicht, die im Spritzgussverfahren aus thermoplastischem Kunststoff gebildet sind gemäß dem Oberbegriff des Anspruchs 1. Weiterhin betrifft die Erfindung ein Verfahren zur Herstellung eines Zierteils.

Aus der DE 10 2010 013 700 A1 ist eine Blende aus Kunststoff für ein Fahrzeug mit einer ersten und mit einer zweiten Komponente bekannt. Die Komponenten sind zumindest teilweise transparent oder semitransparent ausgebildet, wobei die zweite Komponente eine oder mehrere Aussparungen für ein Anzeigeelement aufweist.

Aus der DE 10 2012 110 153 A1 sind ein Formteil, insbesondere ein als Formteil ausgebildetes Zierteil für ein Fahrzeug mit einer Trägerschicht und einer Deckschicht, einer Folie und einer Leuchteinheit zur Beleuchtung der Folie und ein Verfahren zur Herstellung dieses Formteils offenbart. Eine Dekorschicht des Formteils weist einen oder mehrere Lichtdurchlässe, insbesondere eine Vielzahl von Lichtdurchlässen zur Leitung eines sichtbaren Lichts auf.

Weiterhin sind aus der EP 2 684 744 A1 ein Zierteil für ein Kraftfahrzeug und ein Verfahren zur Herstellung des Zierteils offenbart.

Der Erfindung liegt die Aufgabe zu Grunde, ein gegenüber dem Stand der Technik verbessertes Zierteil für ein Fahrzeug und ein verbessertes Verfahren zur Herstellung eines solchen Zierteils anzugeben.

Hinsichtlich des Zierteils wird die Aufgabe erfindungsgemäß durch die im Anspruch 1 angegebenen Merkmale und hinsichtlich des Verfahrens durch die im Anspruch 14 angegebenen Merkmale gelöst.

Vorteilhafte Ausgestaltungen der Erfindung sind Gegenstand der Unteransprüche.

Das erfindungsgemäße Zierteil ist für ein Fahrzeug vorgesehen. Das Zierteil umfasst eine Trägerschicht und eine Deckschicht, die im Spritzgussverfahren aus thermoplastischem Kunststoff gebildet sind, und mindestens eine Folie, insbesondere eine bedruckte oder eingefärbte Folie, die auf einer Oberflächenseite von der Deckschicht umspritzt und auf der gegenüberliegenden Oberflächenseite partiell von der Trägerschicht umspritzt ist, wobei die Trägerschicht im Bereich der Folie zumindest eine Aussparung aufweist, in welcher eine Leuchteinheit zur Beleuchtung der Folie anordbar ist.

Das Zierteil zeichnet sich durch eine besonders geringe Bauhöhe aus. Die Integration des Zierteils in einen vorgegebenen Bauraum ist insbesondere bei Blenden im Fahrzeugaußenbereich auf wenige Millimeter begrenzt. Hierbei weist das Zierteil in vorteilhafter Weise nur eine geringe Gesamtdicke, insbesondere von 3,00 mm bis 4,00 mm, auf.

Dabei ist die Folie, insbesondere eine bedruckte, eine eingefärbte oder eine strukturierte Folie zusammen mit der Leuchteinheit durch die Deck- oder Kunststoffschicht/-blende nach außen/vorne und den Träger nach innen/hinten abgedichtet und vor Umwelteinflüssen, Verschmutzung, Staubbildung und Feuchtigkeitsbildung geschützt angeordnet.

Die Folie ist insbesondere aus einem thermoplastischen Material gebildet. Zudem ist die Folie wärmefest ausgebildet. Beispielsweise ist die Folie aus Polycarbonat gebildet. Insbesondere kann die Folie eine extrudierte Polycarbonat-Folie sein. Darüber hinaus kann die Folie transparent oder transluzent ausgebildet sein. Die Folie wird beispielsweise mit einem Muster, Symbolen, Kennzeichen oder anderen gewünschten Zeichen in einem Siebdruck- oder Digitaldruckverfahren bedruckt.

In einer weiteren Ausführungsform kann die Folie mit Streupigmenten und/oder mit einer feinen Mattierung oder Strukturierung versehen sein. Hierdurch können besondere optische Effekte oder eine besonders gleichmäßige Lichtverteilung erzielt werden. In einer möglichen Ausführungsform ist die Folie eingefärbt, insbesondere mit einer transluzenten Grundeinfärbung versehen. Dies ermöglicht weitere optische Effekte.

Durch die Umspritzung der Folie sowohl mit der Deckschicht als auch partiell mit der Trägerschicht ist ein großflächiges Zierteil mit optischen Effekten herstellbar.

Dabei kann die Deckschicht als eine homogene Schicht ausgebildet sein. Insbesondere weist die Deckschicht zumindest eine homogen geschlossene Oberflächenseite auf. Beispielsweise ist die nach außen, insbesondere von der Trägerschicht weg weisende Oberflächenseite homogen geschlossen ausgebildet. Ebenso kann die nach innen, insbesondere in Richtung der Trägerschicht, weisende Oberflächenseite homogen geschlossen ausgebildet sein. Darüber hinaus kann die Deckschicht durchbruchfrei ausgebildet sein. Das heißt, dass die Deckschicht keine Durchbrüche, Durchlässe, Ausnehmungen und/oder Hohlräume, Einschlüsse aufweist.

In einer möglichen Ausführungsform des Zierteils sind die Träger- und Deckschicht bogenförmig ausgestaltet. Beispielsweise ist das Zierteil für eine Blendenanordnung, insbesondere zur Effektbeleuchtung, in einem gekrümmten Fahrzeugaußen- und Fahrzeuginnenbereich vorgesehen.

In einer weiteren Ausführungsform des Zierteils ist die Leuchteinheit als ein Leuchtdioden-Chip ausgebildet. Der Leuchtdioden-Chip weist eine hohe Leuchtintensität bei geringem Bauraumbedarf auf. Somit ist der Leuchtdioden-Chip je nach Ausgestaltung der Aussparung der Trägerschicht in einfacher Weise integrierbar und insbesondere bündig mit der Trägerschicht in dem Zierteil anordenbar.

In einer weiteren Ausgestaltung des Zierteils ist zumindest ein flexibler Schaltungsträger zumindest zur Stromversorgung der Leuchteinheit und zur Abdeckung der Leuchteinheit flächenbündig an der Trägerschicht angeordnet und mit der Leuchteinheit elektrisch verbunden. Hierdurch ist die Leuchteinheit vor Beschädigungen, wie zum Beispiel durch Feuchtigkeits- und Staubbildung, geschützt.

Eine mögliche Ausführungsform sieht vor, dass die Leuchteinheit flächenbündig in der Trägerschicht versenkt angeordnet ist. Das Zierteil mit der flächenbündig versenkt angeordneten Leuchteinheit ist besonders bauraumsparend ausgebildet und weist eine geringe Bauhöhe auf. Die Leuchteinheit ist zudem durch die versenkte Anordnung in der Trägerschicht vor äußeren Einflüssen geschützt angeordnet.

Eine Weiterbildung des Zierteils sieht vor, dass die Trägerschicht aus Acrylnitril-Butadien-Styrol (ABS), die Deckschicht aus Polymethylmethacrylat (PMMA) und die Folie beispielsweise aus Polycarbonat (PC) gebildet sind. Insbesondere zeichnet sich das Zierteil durch eine hohe Formstabilität und ein geringes Gewicht aus. Diese thermoplastischen Kunststoffe sind schnell form- und aushärtbar.

Eine mögliche Ausbildung des Zierteils sieht vor, dass die Folie transparent und optional diffus streuend ausgebildet und abschnittsweise bedruckt ist, insbesondere farblich bedruckt ist, beispielsweise mit Skalen, Zahlen, Maßen und/oder anderen Informationen. Auch kann die Folie mit unterschiedlichen Zeichen und Symbolen, einem Herstelleremblem, Signaturen und Schriftzügen in unterschiedlichen Farben bedruckt sein.

In einer weiteren Ausführungsform des Zierteils sind die Deckschicht und Trägerschicht unterschiedlich transparent ausgebildet. Beispielsweise ist die Trägerschicht intransparent oder opak ausgebildet oder schwarz eingefärbt. Die Deckschicht ist insbesondere semitransparent ausgebildet und kann schwarz eingefärbt sein. Dabei ist die Transparenz der Deckschicht derart ausgestaltet, dass bei ausgeschalteter Leuchteinheit die beispielsweise bedruckte Folie (insbesondere deren Bedruckung) unsichtbar ist. Die Transparenz der Deckschicht beträgt weniger als 10 %, vorzugsweise zwischen 3 % und 5 %.

Eine weitere Ausführungsform des Zierteils sieht vor, dass die Oberflächenseite der Folie vollständig mit der Deckschicht umspritzt ist. Somit ist die Deckschicht flächenbündig und fest mit der Folie stoff- und formschlüssig verbunden. Die Deckschicht schützt die Folie vor äußeren Einflüssen.

Im erfindungsgemäßen Verfahren zur Herstellung eines Zierteils für ein Fahrzeug wird mindestens eine Folie auf einer Oberflächenseite vollständig und auf einer gegenüberliegenden Oberflächenseite partiell mit thermoplastischem Kunststoff umspritzt, wobei auf der gegenüberliegenden Oberflächenseite zumindest eine Aussparung gebildet wird, in welcher eine Leuchteinheit angeordnet wird. Das Zierteil wird in einfacher Weise und nur in wenigen Verfahrensschritten hergestellt.

Ausführungsbeispiele der Erfindung werden im Folgenden anhand von Zeichnungen näher erläutert.

### Darin zeigen:

- Figur 1: schematisch eine Seitenansicht einer Schnittdarstellung eines Zierteils,
- Figur 2: schematisch eine Seitenansicht einer Schnittdarstellung eines Ausführungsbeispiels des Zierteils gemäß Figur 1,
- Figur 3: schematisch eine Vorderansicht einer Leuchteinheit des Zierteils gemäß Figur 1,
- Figur 4: schematisch eine Seitenansicht einer Schnittdarstellung eines Ausführungsbeispiels des Zierteils gemäß Figur 1,

- Figur 5: schematisch eine Seitenansicht einer Schnittdarstellung des Zierteils gemäß Figur 1 beim Zusammenfügen, und
- Figur 6: schematisch eine Seitenansicht einer Schnittdarstellung eines weiteren Ausführungsbeispiels des Zierteils.

Einander entsprechende Teile sind in allen Figuren mit den gleichen Bezugszeichen versehen.

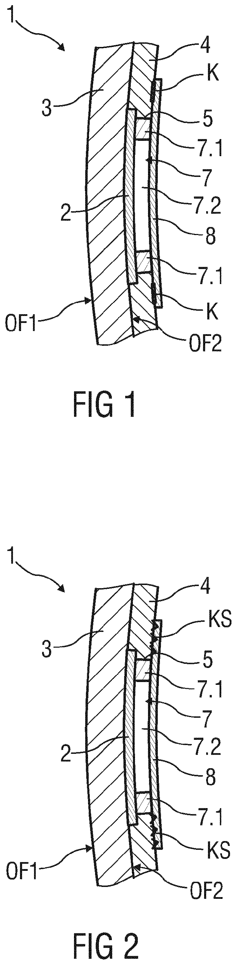

**Figuren 1 und 2** zeigen jeweils eine Seitenansicht einer Schnittdarstellung eines Zierteils 1 für ein nicht näher dargestelltes Fahrzeug.

Das Zierteil 1 ist beispielsweise als eine Blende mit einem integrierten Beleuchtungssystem ausgebildet und insbesondere zur Effektbeleuchtung in einem Fahrzeugaußen- und Fahrzeuginnenbereich vorgesehen. Weiterhin kann das Zierteil 1 beispielsweise als ein Herstelleremblem ausgebildet und mit dekorativen Symbolen bedruckt sein.

Zum Beispiel ist das Zierteil 1 zur Beleuchtung eines Ambientes am oder im Fahrzeug oder zur Ausleuchtung eines Einstiegsbereichs vorgesehen.

Das Zierteil 1 umfasst eine Folie 2, welche beispielsweise ein zu beleuchtendes nicht weiter dargestelltes Symbol, eine Skala, Maße und/oder Zeichen aufweist. Die Folie 2 ist aus einem transluzenten und transparenten thermoplastischen Kunststoff gebildet. Zusätzlich kann die Folie 2 eingefärbt und/oder bedruckt und/oder mit einer Struktur versehen sein. Auch kann die Folie 2 Pigmente enthalten, welche einen bestimmten Leuchteffekt erzeugen.

Die Trägerschicht 4 und die Deckschicht 3 sind im Spritzgussverfahren aus thermoplastischem Kunststoff gebildet. Dabei ist die Folie 2 zwischen der

Deckschicht 3 und der Trägerschicht 4 mit diesen umspritzt und somit zwischen diesen eingebettet.

Eine Oberflächenseite der Folie 2 ist von der Deckschicht 3 umspritzt. Die gegenüberliegende Oberflächenseite der Folie 2 ist partiell von der Trägerschicht 4 umspritzt. Die Trägerschicht 4 weist im Bereich der Folie 2 eine Aussparung 5 auf, in welcher eine Leuchteinheit 7 zur Beleuchtung der bedruckten Folie 2 anordbar ist.

Die Folie 2 ist insbesondere aus einem thermoplastischen Material gebildet und wärmefest, so dass diese von der Deckschicht 3 und partiell von der Trägerschicht 4 umspritzt werden kann. Beispielsweise ist die Folie 2 aus Polycarbonat gebildet. Insbesondere kann die Folie 2 eine extrudierte Polycarbonat-Folie sein. Die Folie 2 ist ferner transparent oder transluzent ausgebildet und beispielsweise mit einem Muster, Symbolen, Kennzeichen oder anderen gewünschten Zeichen in einem Siebdruck- oder Digitaldruckverfahren bedruckt.

Zusätzlich kann die Folie 2 mit Streupigmenten und/oder mit einer feinen Mattierung oder Strukturierung versehen sein. Hierdurch können besondere optische Effekte oder eine besonders gleichmäßige Lichtverteilung erzielt werden. In einer möglichen Ausführungsform ist die Folie 2 eingefärbt, insbesondere mit einer transluzenten Grundeinfärbung versehen.

Durch eine solche in die Deck- und Trägerschicht 3, 4 eingespritzte Folie 2 ist ein großflächiges Zierteil 1, insbesondere eine großflächige Blende, mit einer großflächigen Verzierung, einem Bild, einem Muster, einem Symbol, einem Kennzeichen, einer Werbung oder ähnlichem ermöglicht.

Gegenüber herkömmlichen Zierelementen kann das Zierteil 1 mit eingespritzter Folie 2 beispielsweise Abmessungen von größer 50 cm², insbesondere von größer 1 m² aufweisen.

Dabei kann die eingespritzte Folie 2 sich über die gesamte Oberfläche des Zierteils 1, insbesondere der Deckschicht 3, erstrecken. Alternativ kann ein Rand vorgesehen sein. Zusätzlich können bei einer derart großflächig in die Deckschicht 3 eingespritzten Folie 2 Versteifungsstege im Bereich der Aussparung 5 vorgesehen sein.

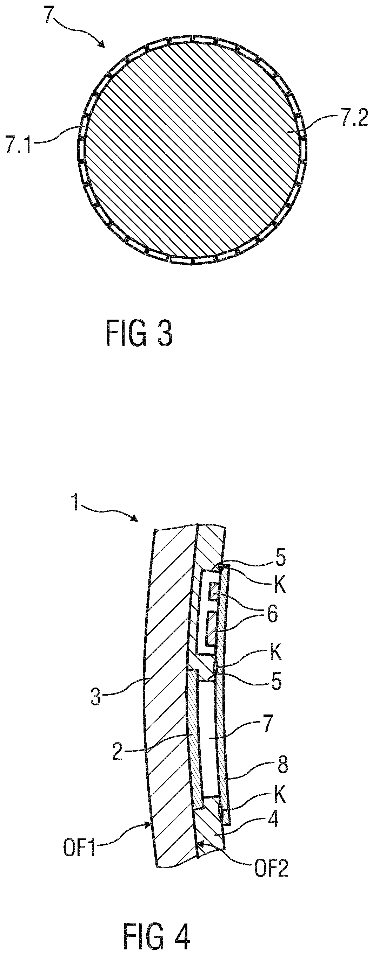

Die Trägerschicht 4 kann, wie in Figur 4 dargestellt, eine Mehrzahl von Aussparungen 5 aufweisen, um zusätzliche Elemente 6 in das Zierteil 1 zu integrieren. Bei den zusätzlichen Elementen 6 handelt es sich insbesondere um Sensoren, Leuchtelemente, Leitungen und/oder elektronische Bauteile und/oder Befestigungsmittel.

Dabei ist die Deckschicht 3 insbesondere als eine homogene Schicht ausgebildet. Beispielsweise weist die Deckschicht 3 eine nach außen, insbesondere von der Trägerschicht 4 weg weisende Oberflächenseite OF1 auf, die homogen geschlossen ist. Ebenso kann die nach innen, insbesondere in Richtung der Trägerschicht 4 weisende Oberflächenseite OF2 homogen geschlossen ausgebildet sein. Wie in Figuren 1, 2 und 4 bis 6 gezeigt, weist die Deckschicht 3 keine Durchbrüche, Durchlässe, Ausnehmungen und/oder Hohlräume, Einschlüsse auf.

Die Deckschicht 3 und die Trägerschicht 4 können bogenförmig ausgestaltet sein. Beispielsweise ist das Zierteil 1 als eine nicht näher dargestellte bogenförmige Blendenanordnung ausgebildet, die in einem gekrümmten Fahrzeugaußen- und Fahrzeuginnenbereich angeordnet ist.

Die Leuchteinheit 7 umfasst eine Anzahl von Leuchtdioden 7.1. Weiterhin umfasst die Leuchteinheit 7 einen insbesondere flachen Lichtleiter 7.2. Um den Lichtleiter 7.2 sind seitlich einstrahlende Leuchtdioden 7.1 angeordnet. Aufgrund des Lichtleiters 7.2 und der seitlich einstrahlenden Leuchtdioden 7.1 ist die Leuchteinheit 7 vergleichsweise flach ausbildbar. Die Leuchteinheit 7 weist eine hohe Leuchtintensität und Helligkeit auf.

Der Lichtleichter 7.2 streut das seitlich eingestrahlte Licht der Leuchtdioden 7.1 gleichmäßig über eine gesamte Fläche des Lichtleiters 7.2. Der Lichtleiter 7.2 beleuchtet die gesamte Fläche der Folie 2 mit gleicher Leuchtintensität und Helligkeit.

Der Lichtleiter 7.2 kann beispielsweise aus einem transparenten und thermoplastischen Kunststoff, insbesondere aus Polymethylmethacrylat (kurz: PMMA) oder Polycarbonat (kurz: PC), gebildet sein.
Die Leuchteinheit 7 weist einen Durchmesser von 20 mm bis 60 mm, insbesondere von 30 mm bis 45 mm, auf. Die Anzahl der Leuchtdioden 7.1 kann in Abhängigkeit von ihrer Leuchtdichte bzw. Lichtstärke variieren. Die Leuchteinheit 7 weist eine Dicke von 0,8 mm bis 3,00 mm, insbesondere von 1,00 mm bis 1,20 mm, auf.

Darüber hinaus kann die bedruckte Folie 2 randseitig dunkel eingefärbt sein, um die Leuchtdioden 7.1 abzudecken, so dass nur die gleichmäßige Streuung des Lichts des Lichtleiters 7.2 erkennbar ist.

Alternativ oder zusätzlich umfasst die Leuchteinheit 7 eine Anzahl von Leuchtdioden-Chips, die unter Chip-on-Board (kurz: COB) bekannt sind. Hierbei weisen die Leuchtdioden 7.1 beispielsweise kein Gehäuse auf und sind direkt mittels Drahtbondens an einem Schaltungsträger 8angebracht.

Der Schaltungsträger 8 ist zumindest zur Stromversorgung der Leuchteinheit 7 und zur Abdeckung der Leuchteinheit 7 flächenbündig an der Trägerschicht 4 angeordnet und mit der Leuchteinheit 7 elektrisch verbunden.

Der Schaltungsträger 8 ist insbesondere eine Leiterplatte, zum Beispiel eine hoch wärmeleitende Aluminiumplatine, und weist eine Dicke von 0,2 mm bis 0,8 mm, insbesondere von 0,3 mm bis 0,5 mm, auf.

Die Leuchteinheit 7 ist insbesondere vor Beschädigungen, wie zum Beispiel durch Feuchtigkeits- und Staubbildung, geschützt und abgedichtet. In vorteilhafter Weise ist die Leuchteinheit 7 flächenbündig in der Trägerschicht 4 zum Schutz vor äußeren Einflüssen versenkt angeordnet. Insbesondere zeichnet sich diese Ausbildung durch eine besonders geringe Bauhöhe (ultraflach) und eine bessere Lichtverteilung aus.

Das Zierteil 1 ist insbesondere aus thermoplastischem Kunststoff gebildet und weist damit eine hohe Kratzfestigkeit und eine hohe Beständigkeit gegenüber Umwelteinflüssen, beispielsweise Witterungsbeanspruchungen und UV-Strahlen, auf.

Die Trägerschicht 4 ist aus Acrylnitril-Butadien-Styrol (ABS) gebildet. Insbesondere ist die Trägerschicht 4 aus intransparentem und/oder schwarz eingefärbtem ABS-Kunststoff gebildet. Die Trägerschicht 4 weist eine Dicke von 0,5 mm bis 1,5 mm, insbesondere von 0,8 mm bis 1,3 mm, auf. Die Dicke kann je nach Bauraumbedarf, Dicke der Leuchteinheit 7 und der zusätzlichen Elemente 6 variieren.

Durch die intransparente Ausbildung der Trägerschicht 4 sind eine Beeinflussung und eine Reflektion des ausgestrahlten Lichts der Leuchteinheit 7 auf benachbart angeordneten Komponenten vermeidbar.

Die Deckschicht 3 ist aus Polymethylmethacrylat (PMMA) gebildet. Insbesondere ist die Deckschicht 3 aus halbtransparentem, transluzentem und/oder eingefärbten PMMA-Kunststoff gebildet. Die Deckschicht 3 weist eine Dicke von 1,0 mm bis 3,5 mm, bevorzugt von 2,0 mm bis 3,0 mm, auf. Die Dicke kann dabei variieren und ist bestimmt durch die Art und Funktion und insbesondere die Beanspruchung des Zierteils 1.

Dabei umgibt die Deckschicht 3 die Folie 2 nach außen vollständig und schützt diese somit vor Umwelteinflüssen.

Aufgrund der Halbtransparenz und/oder Einfärbung der Deckschicht 3 sind hinter der Deckschicht 3 zusätzliche Elemente 6 für einen Fahrzeugnutzer und weitere Personen weder im beleuchteten Zustand noch im nicht beleuchteten Zustand sichtbar. Dies wertet eine Optik des Zierteils 1 auf.

Zusätzlich kann die Deckschicht 3 derart aufgebracht oder nach Aufbringung auf der äußeren Oberflächenseite bearbeitet werden, dass die Deckschicht 3 eine Oberflächenstruktur für eine Griffigkeit oder eine optische Reflexions- und Streufläche aufweist.

Die Folie 2 ist beispielsweise aus Polycarbonat (PC) gebildet. Durch Umspritzen der Folie 2 ist eine stoff- und formschlüssige Verbindung realisiert. Insbesondere ist die Folie 2 aus transparentem und bedrucktem PC-Kunststoff gebildet. Die bedruckte Folie 2 ist beispielsweise mit einem Symbol, einer Skala oder anderen Elementen bedruckt.

Durch Hinterleuchtung der Folie 2 mittels der Leuchteinheit 7 kann das Zierteil 1 zum Beleuchten eines Ambientes am oder im Fahrzeug oder zur Ausleuchtung eines Einstiegsbereichs dienen.

Das Zierteil 1 ist mittels des Spritzgussverfahrens beliebig formbar. Insbesondere ist das Zierteil 1 an unterschiedliche Bauräume, wie zum Beispiel an eine Krümmung des Fahrzeugs, anpassbar. Durch die flexible Ausbildung der Folie 2 und die ultraflache Ausbildung der Leuchteinheit 7 ist auch ein mit einer Krümmung ausgebildetes und somit gebogenes Zierteil 1 besonders flach und hinterleuchtet ausgebildet.

Die Folie 2 weist eine Dicke von 0,1 mm bis 0,9 mm auf. Darüber hinaus ist die Folie 2 bevorzugt kreisförmig ausgebildet und weist einen Durchmesser von 20 mm bis 45 mm, insbesondere von 30 mm bis 40 mm, oder größer auf. Alternativ kann die Folie 2 andere Formen und Größen aufweisen. Insbesondere weist die Folie 2 eine Fläche von größer 3 cm², insbesondere von größer 10 cm², auf. Auch kann die Folie 2 großflächig ausgebildet sein und eine Fläche von größer 50 cm², insbesondere von größer 1 m², aufweisen.

Auch die Leuchteinheit 7 ist bevorzugt kreisförmig ausgebildet und weist einen Durchmesser von 20 mm bis 45 mm, insbesondere von 30 mm bis 40 mm, auf. Insbesondere ist die Leuchteinheit 7 hinter der Folie 2 angeordnet und weist zur vollständigen Hinterleuchtung der Folie 2 einen korrespondierenden, insbesondere weitgehend gleichen Durchmesser, eine weitgehend gleiche Form, Fläche und/oder Größe wie die Folie 2 auf.

Der Schaltungsträger 8 der Leuchteinheit 7 ist mittels eines umlaufenden Befestigungsmittels K form-, kraft- und/oder stoffschlüssig mit der Trägerschicht 4 verbunden.

Das Befestigungsmittel K im Ausführungsbeispiel nach Figuren 1 und 4 bis 6 ist beispielsweise ein Kleb- und/oder Dichtstoff. Der Klebstoff kann als doppelseitiges Klebeband oder als flüssiges Klebemittel ausgebildet sein. Der Klebstoff bewirkt bei dieser Ausführungsform gleichzeitig die Abdichtung zwischen Trägerschicht 4 und Schaltungsträger 8 und schützt so die Leuchteinheit 7 vor Staub und Feuchtigkeit. Alternativ kann der Schaltungsträger 8 mit der Trägerschicht 4 verschweißt sein.

Alternativ oder zusätzlich kann der Schaltungsträger 8 an die Trägerschicht 4, wie in Figur 3 gezeigt, mittels Steckelementen KS gepresst, gesteckt, geklipst oder eingerastet werden. Die Trägerschicht 4 kann zusätzlich mit nicht näher dargestellten Ausnehmungen zur Steckverbindung versehen sein. In dieser Ausführungsform ist dann zusätzlich zwischen der Trägerschicht 4 und dem Schaltungsträger 8 ein Dichtelement angeordnet.

In **Figur 3** ist eine Vorderansicht der Leuchteinheit 7 dargestellt. Hierbei ist die Leuchteinheit 7, umfassend den Lichtleiter 7.2, welcher von Leuchtdioden 7.1 umgeben ist, kreisförmig ausgebildet. Die Leuchteinheit 7 kann in anderen nicht weiter dargestellten Ausführungsformen in ihrer Form und in ihrem Durchmesser variieren.

**Figur 4** zeigt ein weiteres Ausführungsbeispiel für die Trägerschicht 4, die eine Mehrzahl von Aussparungen 5 aufweist, um zusätzliche Elemente 6, wie Sensoren, Leitungen, etc. in das Zierteil 1 zu integrieren.

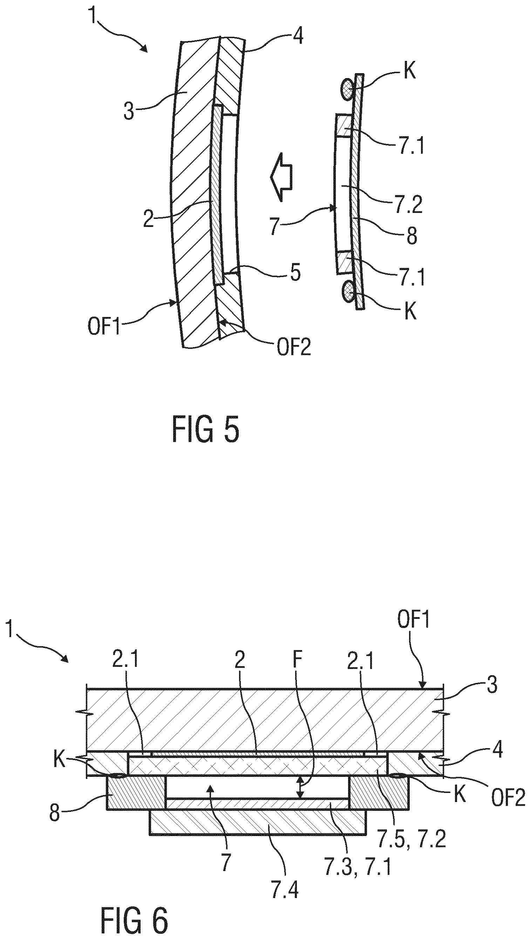

**Figur 5** zeigt in einer Seitenansicht einer Schnittdarstellung des Zierteils 1 beim Zusammenfügen.

Dabei ist die Folie 2 an der Rückseite teilweise von der Trägerschicht 4 und an der Vorderseite vollständig von der Deckschicht 3 mit Kunststoff umspritzt.

In der Trägerschicht 4 ist eine für die Leuchteinheit 7 passende Aussparung 5 ausgebildet.

Das Zierteil 1 mit der Deckschicht 3 und der Trägerschicht 4 und der in diese eingespritzten Folie 2 ist vorgefertigt und wird zur Hinterleuchtung des Zierteils 1 mit der Leuchteinheit 7 versehen, die in die Aussparung 5 der Trägerschicht 4 eingesetzt wird.

Hierzu ist am Rand des Schaltungsträgers 8 umlaufend ein Befestigungsmittel K, beispielsweise ein Kleber, angeordnet, insbesondere aufgetragen. Beim Einsetzen der Leuchteinheit 7 in die Aussparung 5 wird der Schaltungsträger 8 an die Trägerschicht 4 gepresst und das Befestigungsmittel K aktiviert.

Der Lichtleiter 7.2 und der Schaltungsträger 8 können dabei insbesondere aus flexiblen Materialien gebildet sein. Durch Anwendung flexibler Materialien für den Lichtleiter 7.2 und den Schaltungsträger 8 passt sich die Form der Leuchteinheit 7, insbesondere des Schaltungsträgers 8, beim Anpressen an die Form des Zierteils 1 und insbesondere an die Form der Trägerschicht 4 an. Nach dem Aushärten des Befestigungsmittels K ist der Schaltungsträger 8 mit der Trägerschicht 4 stoffschlüssig verbunden.

Im Detail wird die Folie 2 auf der nach außen gerichteten Oberfläche mit PMMA be- und umspritzt. Auf der gegenüberliegenden Oberflächenseite wird die bedruckte Folie 2 partiell mit ABS be- und umspritzt. Hierbei wird die Trägerschicht 4 auf der Folie 2 mit der Aussparung 5 geformt und gebildet. Die Aussparung 5 wird mittig der Folie 2 gebildet, damit die Folie 2 gleichmäßig von der später eingesetzten Leuchteinheit 7 beleuchtet, insbesondere hinterleuchtet, wird.

Nach Aushärtung der Deck- und Trägerschicht 3, 4 wird die Leuchteinheit 7 mit dem Schaltungsträger 8 an die Trägerschicht 4 angebracht. Die Leuchteinheit 7 wird dabei derart in die Aussparung 5 eingebracht, dass diese versenkt im Zierteil 1 angeordnet ist. Somit ist der Schaltungsträger 8 zur Abdeckung der Leuchteinheit 7 flächenbündig an der Trägerschicht 4 angebracht.

**Figur 6** zeigt eine Seitenansicht einer Schnittdarstellung eines weiteren Ausführungsbeispiels des Zierteils 1, umfassend die Folie 2, die von der Deckschicht 3 und der Trägerschicht 4 umspritzt ist.

Die Folie 2 weist eine Dicke von 0,2 mm auf und umfasst eine randseitig umlaufende Einfärbung 2.1.

Hinter der Folie 2 ist eine Streuscheibe 7.5, die beispielsweise eine Dicke von 1,0 mm aufweist und flächenbündig in der Trägerschicht 4 versenkt angeordnet ist. Die Dicke der Trägerschicht 4 beträgt 1,2 mm.

Die Leuchteinheit 7 umfasst weiterhin eine Leuchtdioden-Chipanordnung 7.3 mit einem Leuchtdioden-Chipträger 7.4, wobei die Leuchtdioden-Chips auch unter Nacktchips und Bare-Dies bekannt sind.

Der Leuchtdioden-Chipträger 7.4 ist rückseitig am Schaltungsträger 8 angeordnet und befestigt und randseitig zur Stromversorgung mit diesem elektrisch verbunden.

Zwischen der Leuchtdioden-Chipanordnung 7.3 und der Streuscheibe 7.5 ist ein Abstand F vorgesehen, der zur Homogenisierung des Lichtstroms dient. Im Ausführungsbeispiel beträgt die Dicke des Schaltungsträgers 8 1,6 mm.

Die Anwendung von Leuchtdioden-Chips als Leuchteinheit 7 im dargestellten Ausführungsbeispiel ermöglicht vergleichsweise hohe Lichtstärken und erschließt Anwendungen zum Beispiel unter Tageslichtbedingungen.

Zusammenfassend zeichnet sich das Zierteil 1 durch eine besonders geringe Bauraumhöhe aus und ist sehr flach ausgebildet.

Die Erfindung ist nicht auf die hier beschriebenen Ausführungsbeispiele beschränkt. Es sind auch weitere, hier nicht aufgeführte Ausgestaltungen möglich, die sich aus Kombinationen der hier offenbarten Ausführungsbeispiele ergeben.

### BEZUGSZEICHENLISTE

- 1: Zierteil
- 2: Folie
- 2.1: Einfärbung
- 3: Deckschicht
- 4: Trägerschicht
- 5: Aussparung
- 6: zusätzliche Elemente
- 7: Leuchteinheit
- 7.1: Leuchtdiode
- 7.2: Lichtleiter
- 7.3: Leuchtdioden-Chipanordnung
- 7.4: Leuchtdioden-Chipträger
- 7.5: Streuscheibe
- 8: Schaltungsträger
- K: Befestigungsmittel
- KS: Steckelement
- F: Abstand
- OF1, OF2: Oberflächenseite

## Patentansprüche

1. Zierteil (1) für ein Fahrzeug, mit
- einer Trägerschicht (4) und einer homogen geschlossenen Deckschicht (3), die im Spritzgussverfahren aus thermoplastischem Kunststoff gebildet sind,
- mindestens einer bedruckten Folie (2), die auf einer Oberflächenseite von der Deckschicht (3) umspritzt und auf der gegenüberliegenden Oberflächenseite partiell von der Trägerschicht (4) umspritzt ist, wobei
- die Trägerschicht (4) im Bereich der Folie (2) zumindest eine Aussparung (5) aufweist,
- in welcher eine Leuchteinheit (7) zur Beleuchtung der Folie (2) angeordnet ist, wobei
- eine Transparenz der Deckschicht (3) derart ausgestaltet ist, dass bei einer ausgeschalteten Leuchteinheit (7) die bedruckte Folie (2) unsichtbar ist.

2. Zierteil (1) nach Anspruch 1,
wobei die Deckschicht (3) als eine homogene Schicht ausgebildet ist.

3. Zierteil (1) nach Anspruch 1 oder 2,
wobei die Deckschicht (3) zumindest eine homogen geschlossene Oberflächenseite (OF1, OF2) aufweist.

4. Zierteil (1) nach einem der vorhergehenden Ansprüche,
wobei die Deckschicht (3) zumindest zwei homogen geschlossene Oberflächenseiten (OF1, OF2) aufweist.

5. Zierteil (1) nach einem der vorhergehenden Ansprüche,
wobei die Träger- und Deckschicht (4, 3) bogenförmig ausgestaltet sind.

6. Zierteil (1) nach einem der vorhergehenden Ansprüche,
wobei die Leuchteinheit (7) als ein Leuchtdioden-Chip ausgebildet ist.

7. Zierteil (1) nach einem der vorhergehenden Ansprüche,
wobei zumindest ein flexibler Schaltungsträger (8) zumindest zur Stromversorgung der Leuchteinheit (7) und zur Abdeckung der Leuchteinheit (7) flächenbündig an der Trägerschicht (4) angeordnet und mit der Leuchteinheit (7) elektrisch verbunden ist.

8. Zierteil (1) nach einem der vorhergehenden Ansprüche,
wobei die Leuchteinheit (7) flächenbündig in der Trägerschicht (4) versenkt angeordnet ist.

9. Zierteil (1) nach einem der vorhergehenden Ansprüche,
wobei die Trägerschicht (4) aus Acrylnitril-Butadien-Styrol (ABS), die Deckschicht (3) aus Polymethylmethacrylat (PMMA) und die bedruckte Folie (2) aus Polycarbonat (PC) gebildet sind.

10. Zierteil (1) nach einem der vorhergehenden Ansprüche,
wobei die Folie (2) zumindest abschnittsweise bedruckt und/oder eingefärbt ist und/oder mit einer Struktur und/oder mit Pigmenten versehen ist.

11. Zierteil (1) nach einem der vorhergehenden Ansprüche,
wobei die Deckschicht (3) und Trägerschicht (4) unterschiedlich transparent ausgebildet sind.

12. Zierteil (1) nach einem der vorhergehenden Ansprüche,
wobei die Oberflächenseite der Folie (2) vollständig mit der Deckschicht (3) umspritzt ist.

13. Zierteil (1) nach einem der vorhergehenden Ansprüche,
wobei die Folie (2) sich weitgehend über die gesamte Oberfläche der Deckschicht (3) erstreckt.

14. Verfahren zur Herstellung eines Zierteils (1) für ein Fahrzeug nach einem der vorhergehenden Ansprüche,
- mit mindestens einer bedruckten Folie (2), wobei
- die Folie (2) auf einer nach außen gerichteten Oberflächenseite vollständig homogen und auf einer gegenüberliegenden Oberflächenseite partiell mit einem thermoplastischen Kunststoff umspritzt wird, wobei
- auf der gegenüberliegenden Oberflächenseite die Trägerschicht (4) mit zumindest einer Aussparung (5) auf der partiell umspritzten Folie (2) geformt und gebildet wird, wobei
- die Aussparung (5) mittig der Folie (2) gebildet wird und wobei
- in die Aussparung (5) eine Leuchteinheit (7) angeordnet wird.

## Claims

1. Decorative trim part (1) for a vehicle, having
- a carrier layer (4) and a homogenously compact cover layer (3), said layers (3, 4) being formed from a thermoplastic plastics material in an injection-moulding process;
- at least one printed film (2) which on one surface side is injection-moulded by the cover layer (3) and on the opposite surface side is partially injection-moulded by the carrier layer (4), wherein
- the carrier layer (4) in the region of the film (2) has at least one clearance (5),
- in which (5) an illumination unit (7) for illuminating the film (2) is disposed, wherein
- a transparency of the cover layer (3) is designed in such a manner that the printed film (2) is invisible in the case of a switched-off illumination unit (7).

2. Decorative trim part (1) according to claim 1, wherein the cover layer (3) is configured as a homogenous layer.

3. Decorative trim part (1) according to either of claims 1 and 2, wherein the cover layer (3) has at least one homogenously compact surface side (OF1, OF2).

4. Decorative trim part (1) according to one of the preceding claims, wherein the cover layer (3) has at least two homogenously compact surface sides (OF1, OF2).

5. Decorative trim part (1) according to one of the preceding claims, wherein the carrier layer and cover layer (4, 3) are designed in an arcuate manner.

6. Decorative trim part (1) according to one of the preceding claims, wherein the illumination unit (7) is configured as a light-emitting diode chip.

7. Decorative trim part (1) according to one of the preceding claims, wherein at least one flexible interconnect device (8) at least for supplying power to the illumination unit (7) and for covering the illumination unit (7) is disposed so as to be flush with the face on the carrier layer (4) and is electrically connected to the illumination unit (7).

8. Decorative trim part (1) according to one of the preceding claims, wherein the illumination unit (7) is disposed in the carrier layer (4) in a concealed manner, so as to be flush with the face of the latter.

9. Decorative trim part (1) according to one of the preceding claims, wherein the carrier layer (4) is formed from acrylonitrile-butadiene-styrene (ABS), the cover layer (3) is formed from polymethylmethacrylate (PMMA), and the printed film (2) is formed from polycarbonate (PC).

10. Decorative trim part (1) according to one of the preceding claims, wherein the film (2) at least in portions is printed and/or dyed, and/or is provided with a structure and/or with pigments.

11. Decorative trim part (1) according to one of the preceding claims, wherein the cover layer (3) and the carrier layer (4) are configured so as to be of dissimilar transparency.

12. Decorative trim part (1) according to one of the preceding claims, wherein the surface side of the film (2) is completely injection-moulded with the cover layer (3).

13. Decorative trim part (1) according to one of the preceding claims, wherein the film (2) extends largely across the entire surface of the cover layer (3).

14. Method for the production of a decorative trim part (1) for a vehicle, according to one of the preceding claims,
- having at least one printed film (2), wherein
- the film (2) on an outwardly directed surface side is injection-moulded in a completely homogenous manner, and on an opposite surface side is partially injection-moulded with a thermoplastic plastics material,
wherein
- the carrier layer (4) on the opposite surface side is formed and generated having at least one clearance (5) on the partially injection-moulded film (2), wherein
- the clearance (5) is formed so as to be centric on the film (2), and
wherein
- an illumination unit (7) is disposed in the clearance (5).

## Revendications

1. Pièce décorative (1) pour un véhicule, avec
- une couche de support (4) et une couche de recouvrement fermée de façon homogène (3), qui sont formées en matière plastique thermoplastique par un procédé de moulage par injection,
- au moins une feuille imprimée (2), qui est enrobée par la couche de recouvrement (3) sur au moins un côté de la surface et qui est enrobée partiellement par la couche de support (4) sur le côté opposé de la surface, dans laquelle
- la couche de support (4) présente dans la région de la feuille (2) au moins une découpe (5),
- dans laquelle une unité lumineuse (7) est disposée pour l'éclairage de la feuille (2), dans laquelle
- une transparence de la couche de recouvrement (3) est réalisée de telle manière que la feuille (2) soit invisible lorsque l'unité lumineuse (7) est éteinte.

2. Pièce décorative (1) selon la revendication 1, dans laquelle la couche de recouvrement (3) est constituée par une couche homogène.

3. Pièce décorative (1) selon la revendication 1 ou 2, dans laquelle la couche de recouvrement (3) présente au moins un côté de la surface fermé de façon homogène (OF1, OF2).

4. Pièce décorative (1) selon l'une quelconque des revendications précédentes, dans laquelle la couche de recouvrement (3) présente au moins deux côtés de la surface fermés de façon homogène (OF1, OF2).

5. Pièce décorative (1) selon l'une quelconque des revendications précédentes, dans laquelle la couche de support et la couche de recouvrement (4, 3) sont réalisées en forme d'arc.

6. Pièce décorative (1) selon l'une quelconque des revendications précédentes, dans laquelle l'unité lumineuse (7) est formée par une puce à diode électroluminescente.

7. Pièce décorative (1) selon l'une quelconque des revendications précédentes, dans laquelle au moins un support de circuit flexible (8) est posé à fleur de la surface sur la couche de support (4) et électriquement raccordé à l'unité lumineuse (7) au moins pour l'alimentation électrique de l'unité lumineuse (7) et pour le recouvrement de l'unité lumineuse (7).

8. Pièce décorative (1) selon l'une quelconque des revendications précédentes, dans laquelle l'unité lumineuse (7) est disposée à fleur de la surface de façon enfoncée dans la couche de support (4).

9. Pièce décorative (1) selon l'une quelconque des revendications précédentes, dans laquelle la couche de support (4) est formée d'acrylonitrile-butadiène-styrène (ABS), la couche de recouvrement (3) est formée de poly(méthacrylate de méthyle) (PMMA) et la feuille imprimée (2) est formée de polycarbonate (PC).

10. Pièce décorative (1) selon l'une quelconque des revendications précédentes, dans laquelle la feuille (2) est au moins localement imprimée et/ou colorée et/ou dotée d'une structure et/ou de pigments.

11. Pièce décorative (1) selon l'une quelconque des revendications précédentes, dans laquelle la couche de recouvrement (3) et la couche de support (4) sont réalisées de façon différemment transparente.

12. Pièce décorative (1) selon l'une quelconque des revendications précédentes, dans laquelle le côté de la surface de la feuille (2) est enrobé entièrement avec la couche de recouvrement (3).

13. Pièce décorative (1) selon l'une quelconque des revendications précédentes, dans laquelle la feuille (2) s'étend largement sur toute la surface de la couche de recouvrement (3).

14. Procédé de fabrication d'une pièce décorative (1) pour un véhicule selon l'une quelconque des revendications précédentes,
- avec au moins une feuille imprimée (2), dans lequel
- la feuille (2) est enrobée entièrement de façon homogène sur un côté de la surface tourné vers l'extérieur et partiellement sur un côté opposé de la surface avec une matière plastique thermoplastique, dans lequel
- sur le côté opposé de la surface la couche de support (4) est moulée et formée avec au moins une découpe (5) sur la feuille partiellement enrobée (2), dans lequel
- la découpe (5) est formée au milieu de la feuille (2), et dans lequel
- une unité lumineuse (7) est disposée dans la découpe (5).
